# EUROPEAN PATENT APPLICATION

(11) **EP 4 144 879 A1**
(43) Date of publication of application: **08.03.2023**
(21) Application number: 22784536.9
(22) Date of filing: 25.03.2022
(51) Int. Cl.: C22C 27/04, C22C 1/04, C22F 1/00, C22F 1/18, B22F 3/10, B22F 1/00

(54) **TUNGSTEN MATERIAL**

(30) Priority: 06.04.2021 JP 2021064811
(71) Applicant: A.L.M.T. Corp., Minato-ku Tokyo 105-0014 (JP)
(72) Inventor: IIKURA, Takeshi, Sakata-shi, Yamagata 998-0064 (JP); KADOKURA, Takanori, Toyama-shi, Toyama 931-8543 (JP)
(74) Representative: Prüfer & Partner mbB Patentanwälte · Rechtsanwälte
(86) International application number: PCT/JP2022/014433
(87) International publication number: WO 2022/215551

(57) **Abstract**

A ratio of an angle of 2 to 15° is 50% or more in an arbitrary surface of the tungsten material, the angle being formed between a specific crystal orientation of a first crystal grain and a specific crystal orientation of a second crystal grain adjacent to the first crystal grain.

## Description

### TECHNICAL FIELD

The present disclosure relates to a tungsten material. The present application claims a priority based on Japanese Patent Application No. 2021-064811 filed on April 6, 2021, the entire contents of which are incorporated herein by reference.

### BACKGROUND ART

Conventionally, a tungsten material is disclosed, for example, in Japanese Patent Laying-Open No. 62-146235 (PTL 1).

### CITATION LIST

### PATENT LITERATURE

PTL 1: Japanese Patent Laying-Open No. 62-146235

### SUMMARY OF INVENTION

A ratio of an angle of 2 to 15° is 50% or more in an arbitrary surface of the tungsten material, the angle being formed between a specific crystal orientation of a first crystal grain and the specific crystal orientation of a second crystal grain adjacent to the first crystal grain.

### BRIEF DESCRIPTION OF DRAWINGS

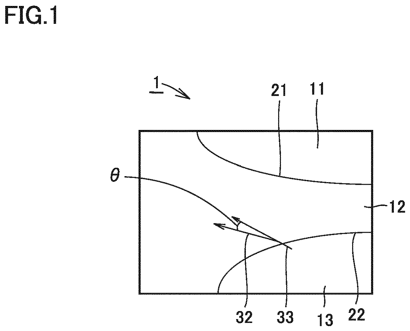

Fig. 1 is a structure diagram of a tungsten material having a plurality of crystal grains.

### DESCRIPTION OF EMBODIMENTS

### [Problem to be Solved by the Present Disclosure]

The conventional tungsten material is cracked or deformed when thermal shock is applied thereto at short intervals, disadvantageously.

### [Description of Embodiments of the Present Disclosure]

First, embodiments of the present disclosure will be listed and described.

### (Background Art)

In Japanese Patent Laying-Open No. 62-146235, a tungsten member contains 0.003 to 0.05 mass% of K/Si and has a secondary recrystallization grain range of one or less crystal grain per 100 mm². The tungsten member serves to reduce crystal grain boundaries at which cracking of a high-temperature structural material such as a component in a furnace is caused, and has excellent high-temperature creep strength.

Tungsten is one of high-melting-point materials (melting point of 3422°C) and can be used in a high-temperature furnace that can be used even at a temperature load of more than 2000°C. However, when used for a long period of time, deformation and cracking occur. This makes it difficult to perform a stable operation of the furnace.

For a furnace member, a tungsten material subjected to plastic working by rolling or the like is used; however, recrystallization generally occurs when exposed to a temperature of more than 1200°C, and grain growth occurs when a heat load temperature becomes more than 1800°C, with the result that deformation and cracking are more likely to occur.

A tungsten material has a high melting point and is used as a high-temperature furnace member. In a tungsten material used at a high temperature, crystal grains become coarse due to use at a high temperature for many years, and has a high-temperature creep characteristic. On the other hand, the tungsten material is weak to thermal shock repeated at short intervals.

A furnace member used in a high-temperature atmosphere is composed of a material such as tungsten in order to secure high-temperature deformation resistance. The tungsten material, which is less likely to be deformed at a high temperature, has large crystal grains and has a high Young's modulus. Therefore, the tungsten material is greatly affected by thermal shock at short intervals such as abrupt interruption of power supply and is weak to heat shock.

Conventionally, in a tungsten rolled material, at a temperature load of 2000°C, a crystal grain size is changed to a crystal grain size of more than 200 µm. When such a tungsten material having a crystal grain size of more than 200 µm is used at a temperature of more than 2000°C, cracking may be induced by an abrupt temperature increase or a heat shock caused by turning off a power supply, with the result that a stable operation of the furnace may not be continued.

### (Angle between Specific Crystal Orientations of Adjacent Crystal Grains)

In the present disclosure, novel processing conditions have been adopted to provide a tungsten material that is a rolled material in which a grain boundary characteristic and lattice strain are controlled, thereby improving heat shock resistance.

In the tungsten material of the present disclosure, by controlling each of the crystal grain sizes of recrystallized grains to be 200 µm or less at a temperature load of 2000°C, resistance against cracking due to abrupt temperature change (including repeated temperature change) is increased, thus contributing to an extended life of a furnace.

With the above-described feature, the tungsten material of the present disclosure can be used for the following members: a high-temperature thermal load member such as a heater or reflector used in a high-temperature heating furnace; a member to be irradiated with an electron beam, such as a positive-electrode-fixed or -rotated target of an X-ray generation apparatus; a member for a portion to be subjected to high-temperature plasma such as a divertor or first wall material of a nuclear fusion furnace, or for a portion to be exposed to neutrons.

The present disclosure relates to a tungsten material, wherein a ratio of an angle of 2 to 15° (low-angle grain boundary) is 50% or more in an arbitrary surface of the tungsten material, the angle being formed between a specific crystal orientation of a first crystal grain and a specific crystal orientation of a second crystal grain adjacent to the first crystal grain.

When this ratio is less than 50%, at a thermal load of 2000°C, grains are grown to each have a grain size of more than 200 µm, which facilitates deformation or cracking. More preferably, this ratio is 55% or more. In the present specification, the term "low-angle grain boundary" means that an angle formed between a specific crystal orientation of a first crystal grain and a specific crystal orientation of a second crystal grain adjacent to the first crystal grain is 2 to 15°. The low-angle grain boundary is more preferably 80% or less. The ratio of more than 80% is difficult, and is unsuitable for mass production because cracking may be caused by processing or precise control of conditions is required.

Fig. 1 is a structure diagram of a tungsten material having a plurality of crystal grains. As shown in Fig. 1, a tungsten material 1 has a plurality of crystal grains 11, 12, 13. Grain boundaries among the plurality of crystal grains 11, 12, 13 are crystal grain boundaries 21, 22. A specific crystal orientation (for example, <100>) in crystal grain 12 is indicated by an arrow 32. A crystal orientation in crystal grain 13 is indicated by an arrow 33, and is the same orientation as the crystal orientation indicated by arrow 32. A ratio of the low-angle grain boundary in which an angle θ formed between two arrows 32, 33 is 2 to 15° is 50% or more.

Further, the ratio of the low-angle grain boundary when the tungsten material is heated at 1500°C for 1 hour is more preferably 25% or less. The ratio is more preferably 10% or less.

### A method of measuring the low-angle grain boundary is as follows.

An arbitrary surface of the tungsten material was defined as a measurement surface. The measurement surface is subjected to mechanical polishing, is then subjected to cross section processing using a cross section polisher with an acceleration voltage of 6 kV and an irradiation current of 130 µA, and is then subjected to measurement. A measurement visual field of the measurement surface was set to 200 µm × 600 µm to include the crystal grains as shown in Fig. 1. Crystal grain 12 is in contact with crystal grains 11 and 13. An angle θA formed between the specific crystal orientation of crystal grain 11 and the specific crystal orientation of crystal grain 12 was measured. An angle formed between the specific orientation of crystal grain 12 and the specific orientation of crystal grain 13 was defined as θB. The above-described method was used to measure the angles formed between the adjacent crystal grains in the visual field with crystal grain 12 being centered. The measurement was performed with crystal grain 12 being centered. Until the number of measurements of the angles reached 200, 200 angles formed between adjacent and different crystal grains were measured while moving the range of the visual field of 200 µm × 600 µm as required, and the ratio of the low-angle grain boundary of 2 to 15° was calculated using the 200 measurement results.

A grain boundary characteristic in the measurement field was measured using an EBSD accompanied with a SEM (Gemini 450 provided by ZEISS). For the measurement, SEM conditions were an acceleration voltage of 30 kV and an irradiation current of 25 nA, and EBSD conditions were WD of 13 mm and 0.5 µm step.

Analysis of the measured data was performed using Symmetry provided by Oxford.

### (Lattice Strain)

In arbitrary ten visual fields of the tungsten material, an average value of a lattice strain of (100) is preferably 0.25% or less. Although no cracking was caused by thermal shock at a high temperature even when the average value became more than 0.25%, it was found that with the average value of 0.25% or less, superiority was exhibited in a purpose of use such as a furnace member because no deformation occurred at a high temperature. The average value is more preferably 0.20% or less.

### A method of measuring the lattice strain is as follows.

An arbitrary surface of the tungsten material is defined as a measurement surface. The measurement surface was subjected to mechanical polishing, and was then subjected to DC electrolytic polishing of 10 V using a 1 N KOH-soluble electrolyte solution at a liquid temperature of 22°C so as to remove 20 µm of a hardened layer, which has been caused by the mechanical polishing.

Arbitrary ten visual fields were selected in the measurement surface. The lattice strain was measured using an X-ray diffractometer (Empyrean, DY1204 provided by Malvern Panalytical). The measurement was performed at 2θ of 35 to 135° under the following measurement conditions: Cu was used for a vacuum tube, a voltage was 45 kV, a current was 40 mA, a slit of 10 mm was used, and a scan speed was 0.11°/s. For an analysis of the measured data, High score plus was used to calculate the lattice strain of (100) based on the Rietveld method. The average value of the lattice strains in the 10 visual fields was obtained.

### (Purity of Tungsten Material)

The purity of the tungsten material is preferably 99.9 mass% or more.

When the purity is less than 99.9 mass%, an inevitable impurity existing therein may be volatilized to contaminate the inside of the furnace particularly due to use in a vacuum atmosphere, with the result that the life of the furnace might be decreased. It should be noted that the expression "might" indicates that an event occurs with a slight possibility, and does not mean that the event occurs with a high probability.

The purity of the tungsten material is defined as follows. A method of analyzing the purity is performed in accordance with JIS H1402 (2001) and JIS H1403 (2001), the contents of Mo, Fe, Al, Ca, Mg, and Si in the plate material are measured through chemical analysis, and Al, Ca, Mg, and Si are assumed to be entirely present as oxides (Al₂O₃, CaO, MgO, and SiO₂) and therefore the amounts of Al, Ca, Mg, and Si are handled as the amounts of the oxides. A value obtained by subtracting Mo, Fe, and Al₂O₃, CaO, MgO, and SiO₂ handled as the oxides from 100 was regarded as the purity of tungsten.

However, when used in a reducing atmosphere such as hydrogen or an inert atmosphere such as argon, a tungsten alloy containing an element other than tungsten can also be used. The tungsten alloy not only has a crystal grain size of 200 µm or less even at a temperature load of more than 2000°C, but also can be expected to have high strength due to solid solution and dispersion strengthening of an additive element.

In addition to tungsten, the tungsten alloy contains a total of 20 mass% or less of at least one element selected from a group consisting of Re (rhenium), Ta (tantalum), Cr (chromium), K (potassium), Mo (molybdenum), Ti (titanium), and Zr (zirconium). Such a tungsten alloy is not only suppressed in grain growth under a thermal load of 2000°C, but also is expected to attain high strength. When the total addition amount of the element(s) is more than 20 mass%, cracking might occur due to processing during rolling, so that the total addition amount of the element(s) is preferably suppressed to be 20 mass% or less.

Each of the additive(s) may be in the form of a pure metal, an oxide, a hydride, or a carbide.

### (Crystal Grain Size after Heat Treatment)

The crystal grain size after heating the tungsten material at a temperature of 2000°C for 1 hour is preferably 200 µm or less. When the crystal grain size is more than 200 µm, cracking or deformation might occur due to thermal shock. The crystal grain size is more preferably 100 µm or less.

Regarding the measurement of the crystal grain size, an enlarged photograph of the arbitrary surface is taken at a magnification of 200x. In this photograph, the major axes of at least 50 arbitrary grains were measured, and the average value thereof was regarded as the crystal grain size.

### (Shape)

As long as the tungsten material has the above-described feature, the same effect can be obtained whatever plate thickness in mm the tungsten material has. Production conditions are also not restricted, and high-temperature press (HIP, HP) may be used for sintering. Also, for the plastic working method, there is no restriction and forging, rolling, extrusion, or the like can be employed.

Not only when the tungsten material has a simple shape but also when the tungsten material is provided with a hole by mechanical processing or is subjected to bending processing, the same effect can be obtained. Further, the same effect can be obtained even when a material other than tungsten such as stainless steel, copper, or a copper alloy is joined thereto by brazing or pressure welding.

For the plate thickness of the tungsten material, the thickness of the tungsten material was measured at arbitrary 10 locations using a micrometer, and the average value thereof was used.

### [Details of Embodiments of the Present Disclosure]

Hereinafter, the present invention will be described based on examples.

### (Example 1)

### (1) Production of Tungsten Material

### (1-1) Tungsten Sintering Material Production Step

A W oxide was reduced to obtain a pure W powder as a source material. The FSSS average particle size of the pure W powder in accordance with the Fischer method is 2.5 µm. As required, a Re powder having an FSSS average particle size of 4.0 µm, Ta and Cr powders of 20 µm, a Mo powder having an FSSS average particle size of 4.2 µm, a TiH₂ powder of 20 µm, and a ZrC powder having an FSSS average particle size of 3.0 µm were prepared, and a certain amount of the powders was added to the pure W powder, and they were mixed using a mortar, thereby obtaining a powder mixture. Regarding K, a K-containing W powder was obtained by spraying a KOH aqueous solution to the W oxide and reducing it. In this way, powders of sample No. 1 to No. 24, No. 31 to No. 54 and No. 61 to No. 80 shown in Tables 1 to 3 were obtained. Sample No. 61 to No. 80 are pure W powders.

**[Table 1]**

| Table 1 | Composition (Mass%) | Plate Thicknes s (mm) | Ratio of Low-angle Grain Boundary (%) | Ratio of Low-angle Grain Boundary After Heat Treatment (%) | Crystal Grain Size After Heat Treatment (µm) | Test Result (Thermal-Shock Cracking) | Test Result (Thermal Deformation) |
|---|---|---|---|---|---|---|---|
| Sample No. | | | | | | | |
| 1 | W-0003K | 1.0 | 63.5 | 11.6 | 92 | A | A |
| 2 | W-0.1Cr | | 73.5 | 14.9 | 88 | A | B |
| 3 | W-1Cr | | 54.6 | 12.1 | 80 | B | B |
| 4 | W-5Re | | 76.9 | 13.3 | 82 | A | B |
| 5 | W-10Re | | 53.6 | 12 | 78 | B | B |
| 6 | W-20Re | | 76.1 | 10.3 | 93 | A | A |
| 7 | W-5Re-0.003K | | 63.1 | 13.9 | 88 | A | A |
| 8 | W-10Re-0.003K | | 76.9 | 13.3 | 82 | A | A |
| 9 | W-10Re-0.005K | | 73.6 | 12 | 75 | A | B |
| 10 | W-5Ta | | 74.9 | 13.1 | 72 | A | B |
| 11 | W-10Ta | | 61.8 | 12.6 | 70 | A | B |
| 12 | W-20Ta | | 71.2 | 10.8 | 62 | A | B |
| 13 | W-0.003K | 15.0 | 64.8 | 8.2 | 69 | A | A |
| 14 | W-0.1Cr | | 74.8 | 9.2 | 70 | A | B |
| 15 | W-1Cr | | 79.9 | 9.8 | 68 | A | B |
| 16 | W-5Re | | 76.8 | 12.8 | 65 | A | B |
| 17 | W-10Re | | 66.1 | 10.3 | 70 | A | B |
| 18 | W-20Re | | 72.0 | 9.9 | 62 | A | B |
| 19 | W-5Re-0.003K | | 69.6 | 8.7 | 68 | A | A |
| 20 | W-10Re-0.003K | | 73.0 | 10 | 65 | A | A |
| 21 | W-10Re-0.005K | | 60.3 | 7.8 | 63 | A | A |
| 22 | W-5Ta | | 77.9 | 9.5 | 70 | A | B |
| 23 | W-10Ta | | 64.5 | 8.2 | 69 | A | B |
| 24 | W-20Ta | | 50.0 | 6.8 | 68 | A | B |

**[Table 2]**

| Table 2 | Composition (Mass%) | Plate Thickness(mm) | Ratio of Low-angle Grain Boundary (%) | Ratio of Low-angle Grain Boundary After Heat Treatment (%) | Crystal Grain Size After Heat Treatment (µm) | Test Result (Thermal-Shock Cracking) | Test Result (Thermal Deformation) |
|---|---|---|---|---|---|---|---|
| Sample No. | | | | | | | |
| 31 | W-0.003K | 1.0 | 55.3 | 15.1 | 192 | B | B |
| 32 | W-0.1Cr | | 53.9 | 16.7 | 170 | B | B |
| 33 | W-1Cr | | 54.2 | 14.8 | 168 | B | B |
| 34 | W-5Re | | 51.0 | 14.0 | 166 | B | B |
| 35 | W-10Re | | 50.5 | 14.4 | 180 | B | B |
| 36 | W-20Re | | 50.1 | 15.6 | 178 | B | B |
| 37 | W-5Re-0.003K | | 51.7 | 18.3 | 170 | B | A |
| 38 | W-10Re-0.003K | | 60.4 | 17.9 | 159 | A | A |
| 39 | W-10Re-0.005K | | 59.3 | 16.4 | 160 | A | A |
| 40 | W-5Ta | | 60.1 | 192 | 164 | A | B |
| 41 | W-10Ta | | 62.1 | 18.4 | 158 | A | B |
| 42 | W-20Ta | | 63.0 | 17.1 | 164 | A | B |
| 43 | W-0.003K | 15.0 | 49.2 | 24.4 | 242 | C | C |
| 44 | W-0.1Cr | | 47.2 | 19.1 | 240 | C | C |
| 45 | W-1Cr | | 47.1 | 22.1 | 220 | C | C |
| 46 | W-5Re | | 47.3 | 222 | 215 | C | C |
| 47 | W-10Re | | 46.8 | 24.1 | 225 | C | C |
| 48 | W-20Re | | 46.6 | 18.8 | 228 | C | C |
| 49 | W-5Re-0.003K | | 45.5 | 22.9 | 240 | C | A |
| 50 | W-10Re-0.003K | | 45.2 | 23.2 | 222 | C | A |
| 51 | W-10Re-0.005K | | 46 | 24.9 | 210 | C | A |
| 52 | W-5Ta | | 45.1 | 19.3 | 223 | C | C |
| 53 | W-10Ta | | 48 | 18.2 | 230 | C | C |
| 54 | W-20Ta | | 47.4 | 19.0 | 228 | C | C |

**[Table 3]**

| Table 3 | Plate Thickness (mm) | Ratio of Low-angle Grain Boundary (%) | Ratio of Low-angle Grain Boundary After Heat Treatment (%) | Crystal Grain Size After Heat Treatment (µm) | Test Result (Thermal-Shock Cracking) | Test Result (Thermal Deformation) |
|---|---|---|---|---|---|---|
| Sample No. | | | | | | |
| 61 | 0.5 | 52.1 | 14.8 | 100 | B | B |
| 62 | 1.0 | 77.9 | 13.3 | 95 | A | B |
| 63 | 1.0 | 79.9 | 9.8 | 78 | A | A |
| 64 | 3.0 | 58.3 | 13.6 | 93 | A | B |
| 65 | 5.0 | 57.4 | 11.4 | 88 | A | B |
| 66 | 8.0 | 68.3 | 10.7 | 82 | A | B |
| 67 | 100 | 59.3 | 10 | 75 | A | A |
| 68 | 15.0 | 76.8 | 9.4 | 72 | A | A |
| 69 | 15.0 | 64.2 | 7.2 | 70 | A | A |
| 70 | 18.0 | 82.5 | 5.1 | 62 | A | A |
| 71 | 200 | 80.4 | 4.8 | 58 | A | A |
| 72 | 0.5 | 47.3 | 25.2 | 250 | C | B |
| 73 | 1.0 | 49.2 | 26.7 | 230 | C | B |
| 74 | 3.0 | 58.1 | 23.5 | 180 | B | B |
| 75 | 5.0 | 65.4 | 23.3 | 155 | B | B |
| 76 | 8.0 | 73.2 | 22.5 | 140 | B | B |
| 77 | 100 | 80.1 | 20.3 | 120 | B | B |
| 78 | 15.0 | 69.3 | 19.0 | 115 | B | B |
| 79 | 18.0 | 61.1 | 155 | 105 | B | B |
| 80 | 200 | 55.6 | 15.3 | 103 | B | B |

The composition is pure tungsten.

Each of the powders was used to produce a press-molded material through a mold press by using a press machine.

The press-molded material was sintered using a sintering furnace in a hydrogen atmosphere at 2200°C for 30 hours, thereby obtaining a W sintered material.

The size of the sintered material on this occasion was 100 mm × 100 mm × 100 mm in thickness. The density thereof after the sintering was 18.2 g/cm³.

For the FSSS average particle size, the sintering method is not particularly limited as long as the density of the sintered material is 17.5 g/cm³ or more. As a result of various tests, the FSSS average particle size of the W powder is preferably 1 µm or more and 10 µm or less. When the FSSS average particle size is more than 10 µm, the density might not be increased to such an extent that the sintered material can endure rolling. When the FSSS average particle size is less than 1 µm, density variation might occur in the sintered material.

For the sintering atmosphere, a hydrogen atmosphere, an inert atmosphere such as argon, or a vacuum atmosphere can be selected. When the density after the sintering is 17.5 g/cm³ or more, a combination of a plurality of sintering atmospheres (for example, a hydrogen atmosphere is used up to 1200°C and a vacuum atmosphere is used at 1200 to 2000°C) can be used, and sintering temperature and sintering time can be also freely selected.

Further, a sintered material having a high specific gravity can be obtained by performing pressure sintering such as HIP or HP; however, since the tungsten material might become brittle due to contact with a carbon member or the like during the pressure sintering, sufficient consideration is required when these steps are selected.

### (1-2) Forging Step

The W sintered material was heated at a heating furnace temperature of 1800°C, and then was repeatedly forged using a 1-ton air hammer to attain a thickness of 70 mm in the first heat cycle, thereby preparing a forged material for each of the samples of sample No. 13 to No. 24, No. 43 to No. 54, No. 67 to No. 71 and No. 77 to No. 80. For each of the samples of sample No. 1 to No. 12, No. 31 to No. 42, No. 61 to No. 66 and No. 72 to No. 76, this material was further heated to 1800°C, was then processed using a 1-ton air hammer, and was forged to attain a thickness of 50 mm in the second heat cycle.

### (1-3) Rolling Step

This material forged to have a thickness of 70 mm or 50 mm was heated at a heating furnace temperature of 1800°C and was then rolled and heated repeatedly until the thickness became about 10 mm. On this occasion, the rolling was performed while performing sampling in a range of 20 to 10 mm in thickness. In this way, the samples of sample No. 13 to No. 24, No. 43 to No. 54 and No. 67 to No. 71 and No. 77 to No. 80 were produced.

A heating atmosphere during the rolling may be a nitrogen atmosphere, an argon atmosphere or a hydrogen atmosphere.

The heating temperature during the rolling is preferably 1800°C or more and 2000°C or less. When the temperature is more than 2000°C, the life of the heating furnace becomes short, thus resulting in non-excellent productivity. When the temperature is less than 1800°C, it is difficult to control crystal grain boundary characteristic and lattice strain. A rolling reduction ratio of hot rolling is preferably 5% or more and 15% or less. When the rolling reduction ratio is less than 5% or more than 15%, it is difficult to control crystal grain boundary characteristic and lattice strain.

Next, a heating temperature was set to 1600°C, and the material produced in the preceding rolling step to have a thickness of about 10 mm was heated, and was then rolled and heated repeatedly up to a thickness of 0.5 mm while performing sampling.

In this way, the samples of sample No. 1 to No. 12, No. 31 to No. 42, No. 61 to No. 66 and No. 72 to No. 76 were produced. A heating atmosphere during the rolling may be a nitrogen atmosphere, an argon atmosphere, or a hydrogen atmosphere.

The heating temperature during rolling is preferably 1600°C or more and 1800°C or less. This is due to the following reason: crystal grain growth is likely to occur as the processing is advanced and it is difficult to control crystal grain boundary characteristic and lattice strain when the temperature is less than 1600°C, whereas when the temperature is more than 1800°C, crystal grain growth is likely to occur.

### (1-4) Mechanical Processing

The samples having been through the forging and rolling were cut, polished, and finished to have respective thicknesses, widths, and lengths.

### (2) Evaluation Results

### (2-1) Specification of Compositions

The composition of each of the samples (sample No. 1 to No. 24, No. 31 to No. 54, and No. 61 to No. 80) was specified by using an analysis in accordance with JIS H1402 (2001) and JIS H1403 (2001). For example, the composition "W-0.003K" in sample No. 1 indicates that 0.003 mass% of K is contained and the remainder is W.

### (2-2) Specification of Plate Thickness

The plate thickness (mm) of each of the samples was measured. Results are shown in the column "Plate Thickness (mm)" in the table.

### (2-3) Specification of Ratio of Low-angle Grain Boundary

For each sample, the ratio (%) of the low-angle grain boundary was measured. Results are shown in the column "Ratio of Low-angle Grain Boundary (%)" in the table.

### (2-4) Specification of Ratio of Low-angle Grain Boundary after Heat Treatment

In each of the samples, the ratio (%) of the low-angle grain boundary after heat treatment at a temperature of 1500°C for 1 hour was measured. Results are shown in the column "Ratio of Low-angle Grain Boundary after Heat Treatment (%)" in the table.

### (2-5) Specification of Crystal Grain Size (µm) after Heat Treatment

In each of the samples, the crystal grain size (µm) after heat treatment at a temperature of 2000°C for 1 hour was measured. Results are shown in the column "Crystal Grain Size (µm) after Heat Treatment" in the table.

### (2-6) Thermal-Shock Cracking Test

Each of the samples is employed as a band heater (10 mm in width × 100 mm in length × each thickness) without modification and is fed with power in a hydrogen atmosphere inside a furnace, and output is turned on until a temperature reaches 2000°C on a radiation thermometer, and then the output is turned off immediately. The output is turned on again after passage of 10 seconds from the turning-off, until the temperature reaches 2000°C. This cycle was repeated 1000 times.

Then, whether or not cracking and deformation occurred in each sample was examined. Regarding the cracking after the test, the samples were evaluated as follows: a sample confirmed to have no cracks with the use of a magnifying glass of 5x was evaluated as A; and a sample observed to have one or two cracks that each remained only in its surface was evaluated as B. A sample observed to have three or more cracks or have a crack extending to its inside was evaluated as C.

Results are shown in the column "Test Result (Thermal-Shock Cracking)" in the table.

### (2-7) Thermal Deformation Test

A surface of 10 mm × 100 mm in each sample (heater after the test) after the evaluation of (2-6) was placed on a flat base plate, and an amount of warpage (clearance between each sample and the base plate) was measured using a clearance gauge. When the clearance was 3 mm or less, it was evaluated as A. When the clearance is more than 3 mm and is less than 10 mm, it was evaluated as B. A material having the clearance of 10 mm or more or having a crack therein was evaluated as C.

It was found that when the ratio of the low-angle grain boundary is 50% or more, evaluation A or B can be obtained in terms of the thermal-shock cracking and evaluation A or B can be obtained in terms of the thermal deformation.

It was found that when heat treatment was performed at 1500°C for 1 hour, the ratio of the low-angle grain boundary became 25% or less. It was found that when the crystal grain size after heat treatment at 2000°C for 1 hour was 200 µm or less, evaluation A or B can be obtained in terms of the thermal-shock cracking.

### (Example 2)

A pure W powder was used to obtain samples of sample No. 81 to No. 87 in Table 4 in accordance with "(1) Production of Tungsten Material" in Example 1.

**[Table 4]**

| Table 4 | Plate Thickness (mm) | Ratio of Low-angle Grain Boundary (%) | Lattice Strain (%) | Ratio of Low-angle Grain Boundary after Heat Treatment (%) | Crystal Grain Size after Heat Treatment (µm) | Heating Condition (°C) | Test Result (Thermal-Shock Cracking) | Test Result (Thermal Deformation) |
|---|---|---|---|---|---|---|---|---|
| Sample No. | | | | | | | | |
| 81 | 15.0 | 78.2 | 0.23 | 9.4 | 72 | 1800 | A | A |
| 82 | 15.0 | 74.2 | 0.18 | 7.2 | 70 | | A | A |
| 83 | 15.0 | 76.3 | 0.24 | 9.8 | 80 | | A | A |
| 84 | 15.0 | 79.2 | 0.25 | 10.1 | 94 | | A | A |
| 85 | 15.0 | 79.8 | 0.26 | 13.2 | 95 | | A | B |
| 86 | 18.0 | 80 | 0.30 | 14.6 | 99 | | A | B |
| 87 | 18.0 | 74.0 | 0.41 | 15 | 120 | 1740 | B | A |

During the production of the samples of sample No. 81 to No. 86, heating conditions at the time of rolling were changed.

Various physical properties were evaluated in accordance with "(2) Evaluation Results" of Example 1 and lattice strain was measured. Results are shown in Table 4.

In view of Table 4, it was found that when the lattice strain was 0.25% or less, evaluation A was obtained in terms of thermal-shock cracking and thermal deformation.

The embodiments and examples disclosed herein are illustrative and non-restrictive in any respect. The scope of the present invention is defined by the terms of the claims, rather than the embodiments described above, and is intended to include any modifications within the scope and meaning equivalent to the terms of the claims.

### REFERENCE SIGNS LIST

1: tungsten material; 11, 12, 13: crystal grain; 21, 22: crystal grain boundary; 32, 33: arrow.

## Claims

1. A tungsten material, wherein a ratio of an angle of 2 to 15° is 50% or more in an arbitrary surface of the tungsten material, the angle being formed between a specific crystal orientation of a first crystal grain and the specific crystal orientation of a second crystal grain adjacent to the first crystal grain.

2. The tungsten material according to claim 1, wherein in arbitrary ten visual fields of the tungsten material, an average value of a lattice strain of (100) is 0.25% or less.

3. The tungsten material according to claim 1 or 2, wherein a purity of the tungsten material is 99.9 mass% or more.

4. The tungsten material according to any one of claims 1 to 3, wherein a crystal grain size of the tungsten material is 200 µm or less after performing heat treatment onto the tungsten material at 2000°C for 1 hour.

5. The tungsten material according to any one of claims 1 to 4, wherein the ratio of the angle of 2 to 15° after performing heat treatment onto the tungsten material at 1500°C for 1 hour is 25% or less.

6. The tungsten material according to any one of claims 1 to 5, wherein the tungsten material contains a total of 20 mass% or less of at least one element selected from a group consisting of Re, Ta, Cr, K, Mo, Ti, and Zr.
